# EUROPEAN PATENT APPLICATION

(11) **EP 4 621 525 A1**
(43) Date of publication of application: **24.09.2025**
(21) Application number: 25164863.0
(22) Date of filing: 19.03.2025
(51) Int. Cl.: G06F 1/16, A63F 13/213, A63F 13/60, G06F 3/03, G06F 3/0346, G06F 3/0354, G06F 3/0362, G06F 3/039, G06F 3/04847, G06F 3/0487

(54) **MOTION-SENSING CONTROLLER SYSTEM**

(30) Priority: 21.03.2024 GB 202404042
(71) Applicant: Sony Interactive Entertainment Inc., Tokyo 108-0075 (JP)
(72) Inventor: Armstrong, Calum, London, W1F 7LP (GB)
(74) Representative: Gill Jennings & Every LLP

(57) **Abstract**

A motion-sensing controller system comprises: a motion-sensing controller. The motion-sensing controller comprises a handheld controller body; an orientation-sensing component configured to sense the orientation of the controller body; and an output component configured to generate an output signal based on the sensed orientation of the controller body. The motion-sensing controller system also further comprises a base structure configured to engage with the controller body such that, when the controller body and the base structure are engaged with one another, rotation of the controller body about at least one rotational axis thereof is prevented and the controller body is permitted to rotate at least part-way about another rotational axis thereof.

## Description

### FIELD OF THE INVENTION

This invention relates to a motion-sensing controller, which finds particular application in the field of 3D audio design. The invention also relates to a motion-sensing controller system, a computer system and a method of 3D audio design.

### BACKGROUND

In video games and other audio-visual industries, there is demand for increasingly immersive, realistic audio-visual experiences. One way in which increased depth of experience has been achieved is the development of three-dimensional (3D) audio technologies. 3D audio aims to produce sounds which give the impression of originating from particular locations in 3D space relative to the listener, for example by careful manipulation of the outputs of stereo speakers or headphones to mimic differences in how each of the listener's two ears perceives a given sound.

In the development of 3D audio, the designer spends a significant amount of time manipulating the positions of sound sources relative to the listener and, in the context of video games particularly, controlling the orientation and position of the listener to gauge how the sound environment sounds at different orientations and positions within the video game environment. This work is typically performed using conventional computer peripherals such as a keyboard and mouse to control the orientation and coordinates of the user and/or sound sources. While modern 3D audio design programs provide graphical user interfaces intended to assist this process, they are nonetheless limited in that sound designers often find that navigating the sound environment is slow and difficult, for example because of the limited ability of two-dimensional interfaces to represent 3D spaces. There is hence a need for a way of improving the ease of 3D audio design.

### SUMMARY OF INVENTION

The invention provides a motion-sensing controller system comprising:
a motion-sensing controller comprising:
a handheld controller body;
an orientation-sensing component configured to sense the orientation of the controller body;
an output component configured to generate an output signal based on the sensed orientation of the controller body; and
a base structure configured to engage with the controller body such that, when the controller body and the base structure are engaged with one another, rotation of the controller body about at least one rotational axis thereof is prevented and the controller body is permitted to rotate at least part-way about another rotational axis thereof.

The base structure defined above constrains rotation of the controller body in some directions when engaged with the controller body. This is advantageous because in many 3D audio design applications, the user will sometimes wish to vary orientations in one direction only - for example, they might wish to rotate left and right while remaining in the horizontal plane. The base structure assists the user in carrying out this kind of movement.

Typically the output signal will comprise data representing the sensed orientation of the controller body relative to a predetermined reference orientation. The output signal may be configured to control one or more audio orientation parameters of a 3D audio program, which parameters may define for example the spatial orientation and/or position of one or more sound sources and/or a listener in a virtual 3D audio environment.

In preferred embodiments, the controller body has a generally spherical shape and the base structure comprises a concave region configured to receive the controller body, whereby the base may engage with the controller body. The expression "generally spherical" may be defined as meaning that at least 50% of the surface of the controller body, by area, corresponds to a notional sphere and the remaining parts (e.g. grooves, protrusions or flattened regions) deviate from the notional sphere.

Advantageously there may be formed in either the surface of the controller body or the base structure are one or more grooves each configured to receive a corresponding protrusion formed on the other of the surface of the controller body and the base structure, whereby the base structure may engage with the controller body, wherein preferably the groove(s) are formed in the surface of the controller body and the protrusion(s) are formed on the base structure.

Preferably, the one or more grooves formed in the surface of the controller body comprise a first groove which is substantially circular and the base structure comprises a first protrusion configured to be received by the first groove such that when the first protrusion is received by the first groove: the controller body is permitted to rotate at least part-way about a first rotational axis thereof which is aligned substantially perpendicular to the first groove, and rotation of the controller body about at least one other axis thereof is prevented. This configuration is particular advantageous where the controller body is generally spherical and the base structure has a concave region, as described above, in which case the first protrusion is preferably in the concave region. In this case, the first groove will typically by a "small circle" in the geometric sense, i.e. a circle whose diameter is smaller than that of the spherical controller body. Therefore, preferably, the first groove extends along at least a portion of a small circle on the surface of the controller body. The term "small circle" is being used here in according with its geometric meaning, which is that a "small circle" is a circle on the surface of a sphere whose diameter is smaller than the diameter of the sphere. By contrast, a "great circle" is a circle on the surface of the sphere whose diameter is equal to the diameter of the sphere.

Preferably, the one or more grooves formed in the surface of the controller body comprise a second groove, the second groove preferably being oriented substantially perpendicular to the first groove if said first groove is provided, and wherein the base structure comprises a second protrusion configured to be received by the second groove such that when the first protrusion is received by the first groove: the controller body is permitted to rotate at least part-way about a second rotational axis thereof which is aligned substantially perpendicular to the second groove; and rotation of the controller body about at least one other axis thereof is prevented. Again, this configuration is particularly advantageous where the controller body is generally spherical and the base structure has a concave region, as described above. As noted above, the second groove is preferably oriented perpendicular to the second groove, in which case the second rotational axis is perpendicular to the first rotational axis. This configuration thus enables control over rotation of the controller body in two orthogonal directions. In other embodiments, the first groove and the second groove may not be perpendicular but nonetheless oriented non-parallel to one another. This is still advantageous as it enables rotation of the controller body in two different directions to be achieved, though where the first and second grooves are not perpendicular, the two different directions will not be orthogonal to one another. Preferably, the second groove extends along at least a portion of a great circle on the surface of the controller body.

Advantageously, the base structure may comprise a mount part and a removable secondary part, the mount part comprising a protrusion or a groove, the removable secondary part being shaped such that it may simultaneously: engage with the protrusion or groove of the base structure such that the secondary part is permitted to rotate, relative to the mount part, at least part-way about one rotational axis thereof and is prevented from rotating about all other directions, and engage with a protrusion or groove of the controller body such that the controller body is permitted to rotate, relative to the secondary part, about a rotational axis thereof which is substantially perpendicular to the axis about which the secondary part is permitted to rotate. This arrangement is particularly beneficial when the protrusion on the mount part is the first protrusion defined above and the protrusion formed on the secondary part is the second protrusion defined above. In other words, preferably, the first protrusion is formed in the mount part and the secondary part is configured to engage the mount part by receiving the first protrusion, and the second protrusion is formed in the removable secondary part and controller body is configured to engage with the secondary part by receiving the second protrusion in the second groove. Alternatively, the first protrusion could be formed on the secondary part and the second protrusion on the mount part. This allows the user to constrain rotation of the controller body to one direction when engaged directly with the mount but allows the controller body to rotate around two directions when the secondary part present (since the secondary part can itself rotate around one direction relative to the mount part, and the controller body can rotate around another direction relative to the secondary part).

In preferred embodiments, the orientation-sensing component is configured to sense the orientation of the controller body relative to a predetermined reference orientation. Examples of ways of sensing the orientation of the controller body relative to the predetermined reference orientation will be discussed below. The basic purpose of sensing the orientation relative to a predetermined reference orientation is that this ensures the physical orientation of the controller body in space will always correspond to the signal being output. This contrasts with other kinds of motion sensing in which only relative changes in orientation are sensed. For example, an inertial measurement unit (IMU) can infer changes in orientation and position by integrating measurements of acceleration over time. However, each measurement of change orientation/position obtained in this manner is subject to a degree of error, and these errors compound as successive measurements are summed to track the motion of the controller. Motion sensing techniques based on changes in relative motion thus suffer from the problem of "positional drift". While there may also be some error associated with sensing the orientation of the controller body relative to a predetermined reference orientation, this does not lead to positional drift because the measurements are not required to be added to one another to track the motion of the controller body.

In preferred embodiments, the orientation-sensing component is configured to sense one or more fixed reference points in its surroundings and determine its orientation relative to the predetermined reference orientation based on the sensed reference points. As an example, the orientation-sensing component could comprise one or more cameras configured to identify stationary objects in the room in which the controller is being used (e.g. walls, doors or furniture) and compute the orientation of the controller body based on this positions of those objects in the camera's field of view. Stationary objects in the controller's surroundings are suitable for defining the predetermined reference orientation since in typical use they provide unchanging reference points based on which the controller body's orientation can reliably be sensed. Other means for sensing the orientation of the controller body relative to the predetermined reference orientation are possible, however. For example, the orientation-sensing component could be configured to sense the direction of a local magnetic field and determine its orientation based on the sensed direction of the local magnetic field. In another example, an accelerometer could be used for sensing the orientation of the controller body relative to the vertical direction, though typically in these implementations another means for sensing for the orientation of the controller in the azimuthal direction would be provided. In yet another example, point-of-reference elements such as infrared beacons could be arranged at positions around the controller and the orientation-sensing component could be configured to sense its orientation relative to these elements.

In preferred implementations, the orientation-sensing component is housed within the controller body. This is advantageous as it enables the controller to be provided as a single unit which is simple to install and use. For example, in the case where the orientation-sensing component comprises one or more cameras, said cameras could be housed within the controller body and arrange such that they can view the controller body's surroundings (in other words, looking outwards). However, other implementations are possible: for example, the orientation-sensing component could comprise a camera provided separately to the controller body and which is configured to monitor, in use, the controller body and compute its position (e.g. by monitoring the positions of indicia on the controller body's surface).

As noted above, preferably the orientation-sensing component may advantageously comprise one or more cameras configured to sense the orientation of the controller body relative to its surroundings, wherein the predetermined reference orientation is a predetermined orientation of the controller body relative to said surroundings. Where the orientation-sensing component comprises one or more cameras, the cameras may be further configured to sense to position of the controller relative to a predetermined reference point (such as the base structure described below) since it is possible to identify, from images captured by the cameras, translational movements of the controller body in addition to changes in its orientation.

As noted above, the orientation-sensing component may be configured to sense the direction of a reference magnetic field and determine its orientation relative to the predetermined reference orientation based on the sensed direction of the reference magnetic field. This is particularly advantageous where the orientation-sensing component is housed within the controller body, since in these examples the orientation of the orientation-sensing component will correspond to that of the controller body. Such a magnetic field could be provided by a magnet housed in the base structure. The reference magnetic field could alternatively be the ambient magnetic field in the environment of the controller (comprising e.g. the Earth's magnetic field and any other ambient magnetic field sources).

Preferably, the motion-sensing controller is a wireless controller and the output component is configured to output the output signal as a wireless signal. The controller being wireless in this manner is beneficial since this allows the user to manipulate the controller body freely in all directions without a wire constraining or impeding its movement. It is also preferred that the output component is housed within the controller body, though this need not always be the case, particular where the motion-sensing component is separate to the controller body.

Preferably, the controller body is configured such that, by visual inspection of the controller body, the user can ascertain the orientation of the controller body. In these embodiments, the user of the controller is able to discern the orientation of the controller body visually, so they can quickly and easily infer what output the controller is producing simply by observing the orientation of the controller body. Thus, the user can simply and intuitively control parameters such as the orientation of sound sources or the listener in a virtual 3D audio environment by rotating the controller body and can gauge what signal the controller is outputting simply by observing its orientation. As an example of the visual configuration defined above, the controller body may comprise indicia that are visible to the user in use and arranged such that the user can ascertain the orientation of the controller body by visual inspection of the indicia. The "indicia" may be any visible features by which the user can discern the orientation of the controller body, for example shapes formed on or in the surface the controller body, markings applied to the controller body, lights arranged on the surface of the controller body, or an electronic display configured to display such visible features in use. It should be noted that not all indicia or other forms of visual configuration necessarily fulfil the requirement of enabling the user to ascertain the orientation of the controller body. For example, if the controller body had a spherical form and the only visible indicia on its surface were circular markings on opposite poles of the sphere, the user would not be able to tell the azimuthal orientation of the controller body about the axis between the two poles. By "enabling the user to ascertain the orientation of the controller body", we mean that the user can ascertain the orientation of the controller body in three dimensions: to describe this in terms of a spherical coordinate system, the user must be able to distinguish between all different combinations of azimuthal angle and polar angle (since each unique combination of azimuthal angle and polar angle represents a different orientation).

Preferably, the surface of the controller body comprises a region flattened along at least one direction, preferably two directions, said region being arranged such that when the region is placed against a planar surface in use, rotation of the controller body in the direction(s) along which the region is flattened is prevented. This provides a straightforward way of enabling the user to perform actions such as panning around in the plane parallel to the region (e.g. the horizontal plane) without introducing any rotation in other directions. It also allows the controller body to be put down without rolling away, particularly if the region is flattened along two directions. An example of a region flattened along two directions is a planar region. An example of a region flattened along only one direction is a cylindrical band extending around the circumference of an otherwise generally spherical controller body, which would be flat along the axis of the cylinder but curved in the circumferential direction. This example would permit the controller body to be rolled along the circumferential direction when placed against a planar surface but would prevent the controller being rotated in the perpendicular direction, along which the surface of the band is flat.

The invention also provides: a computer system comprising: the motion-sensing controller system defined above; and a processor configured to receive the output signal produced by the output component of the motion-sensing controller and control a computer program being executed by the processor based on the received output signal.

The computer program may be a 3D audio program configured to control one or more audio orientation parameters thereof based on the received output signal, the one or more audio orientation parameters defining the spatial orientation and/or position of one or more sound sources and/or a listener in a virtual 3D audio environment.

The invention also provides a method of interacting with a virtual 3D audio environment, the method comprising: executing a 3D audio program in which one or more audio orientation parameters define the spatial orientation and/or position of one or more sound sources in the 3D audio environment and/or a listener in the virtual 3D audio environment; and using an output signal generated by the motion-sensing controller system defined above to control the one or more audio orientation parameters.

### BRIEF DESCRIPTION OF DRAWINGS

Examples of a motion-sensing controller system, computer system and method of 3D audio design in accordance with embodiments of the invention will now be described with reference to the accompanying drawings, in which:
Figure 1 shows a first view of a motion-sensing controller system in accordance with an embodiment of the invention;
Figure 2 shows a second view of the system shown in Figure 1;
Figure 3 shows a third view of the system shown in Figures 1;
Figure 4 shows schematically the internal components of the controller body shown in Figure 1;
Figure 5 and Figure 6 show detailed views of components of the base structure shown in Figures 1 to 3; and
Figure 7 shows schematically an example of a computer system in accordance with an embodiment of the invention.

### DETAILED DESCRIPTION

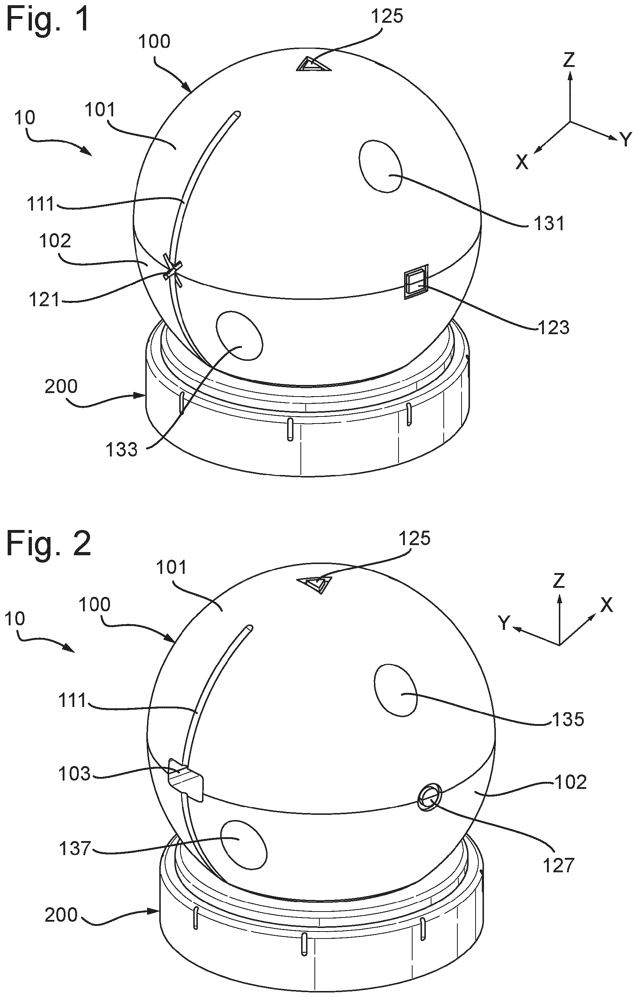

Figures 1 to 3 show different views of a motion-sensing controller system 10 in accordance with an embodiment of the invention. The controller system 10 comprises a handheld controller body 100 and a base structure 200, on which the controller body 100 can be placed in use as shown in this drawing. In each of Figures 1 to 3, the orientation of the controller body 100 is indicated by the X, Y and Z axes.

The controller body 100 is of a generally spherical shape and in this example is constructed from an upper hemisphere 101 and a lower hemisphere 102. As will be explained below, the controller system 10 is configured such that the orientation of the controller body relative to a predetermined reference orientation is sensed and used to generate an output signal. A charging port 103 (shown in Figure 2) is formed in the controller body 100.

In this example, the sensing of the orientation of the controller body 100 is achieved by the provision of cameras 131, 133, 135, 137, which are arranged at different positions on the surface of the controller body 100, each having a field of view that encompasses a respective part of the surroundings of the controller body 100. Based on the images captured by the cameras 131, 133, 135, 137, the orientation of the camera body 100 relative to its surroundings can be determined (e.g. by identification of objects such as walls and items of furniture). In this way, the orientation of the controller body 100 can be sensed without relying on measurements of relative changes in its orientation (such as would be provided by an inertial measurement unit (IMU)), thereby preventing the output of the controller system 10 suffering from positional drift. The unchanging orientation of the surroundings of the controller system 10 (e.g. a room) serves as the predetermined reference orientation relative to which the orientation of the controller body 100 is sensed in this example.

It will be appreciated that the orientation of the controller body 100 could be sensed by means other than cameras installed in the surface of the controller body 100. For example, this could be achieved by providing cameras separate to the controller body 100, arranged to monitor the orientation of the controller by tracking the positions of indicia on the surface of the controller body. Another way in which the orientation of the controller body 100 could be sensed is by provision of a magnetic sensor installed in the controller body 100, configured to sense the direction of a fixed magnetic field and compute from this the orientation of the controller. Such a fixed magnetic field could be provided by a magnet installed in the base structure 200, for example.

Formed in the surface of the controller body 100 are a set of symbols 121, 123, 125, 127, which serve as indicia by which the orientation of the controller body 100 can be ascertained. The configuration of these indicia is such that the orientation of the controller body 100 can be ascertained by visual inspection of them. For example, the X-shaped symbol 121 (best shown in Figure 1) can be taken as the 'front' of the controller body 100. If this symbol were the only visible feature on the surface, it would not be possible to ascertain in full the orientation of the controller body 100 by visual inspection because this symbol appears the same when the controller is rotated 90°, 180° or 270° about the X axis - in other words, the rotational position of the controller body 100 about the X axis cannot be determined from the symbol 121 alone. However, the presence of other visible indicia 123, 125, 127 ensures that the specific orientation of the controller body 100 can be determined - for example, the exact rotational orientation of the controller body 100 about the X axis can be determined from the position of the triangle symbol 125 (which marks the 'top' of the controller body 100), square symbol 123 (which marks the 'left side') or circle symbol 127 (which marks the 'right side', shown in Figure 2) in combination with the X symbol 121.

It should be noted that other features visible on the surface of the controller body 100 can also serve as indicia for ascertaining the orientation of the controller body 100. For example, orientation of the controller body could be inferred from the positions of the cameras 131, 133, 135, 137, charging port 103, and first groove 113 and second groove 111. If the arrangement of these features is such that the orientation of the controller body 100 can be ascertained from them, it is not strictly necessary to provide a set of symbols 121, 123, 125, 127 for this purpose. However, the provision of these symbols 121, 123, 125, 127 is preferred because they are distinctive and easily intelligible, thereby ensuring the user can immediately ascertain the orientation of the controller body 100 in all orientations.

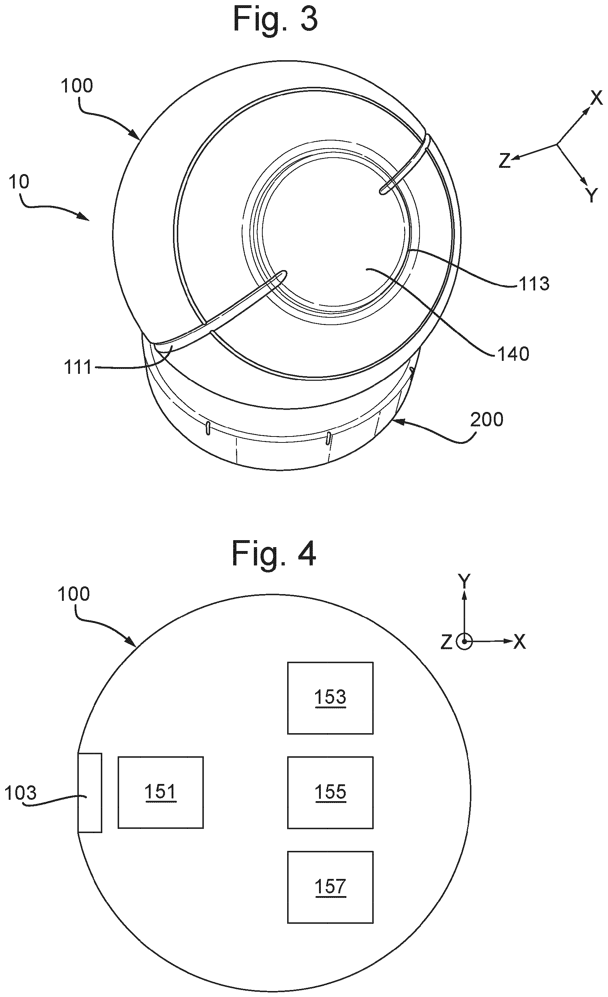

As noted above, the controller body 10 has a generally spherical shape. However, the surface of the controller body 10 has a flattened, planar region 140, which is best seen in Figure 3. The surface of the controller body 10 in the planar region 140 is flat in two directions and lies perpendicular to the Z axis. The planar region 140 conveniently allows the controller body 140 to be rested on a surface such as a tabletop in use and rotated about the Z axis while rotation about the X and Y axis is restricted. This provides a straightforward way of enabling the user to perform actions such as panning around in the horizontal plane without introducing any pitch or roll. It also allows the controller body 10 to be put down without rolling away. In this case, the boundary of the planar region 140 corresponds to the first groove 113.Figure 4 shows schematically the components of the controller body 100 in the embodiment shown in Figures 1-3. The power inlet 103 (which may be for example a USB port) is connected to a battery 151 such that the battery 151 can be charged by a cable plugged into the power inlet 103. The controller body 100 houses a processor 153, an orientation-sensing component 155, and an output component 157.

The orientation-sensing component in this embodiment is configured to receive the images captured by the cameras 131, 133, 135, 137 and compute the orientation of the controller relative to its surroundings based on the captured images. It should be noted that the orientation-sensing component 155 is not necessarily housed within the controller body 100 in all embodiments: for example, in the case where the orientation is sensed by cameras external to the controller body, the orientation-sensing component could be implemented by an external processor.

The output component 157 is configured to communicate with the orientation-sensing component 155 and generate an output signal based on the sensed orientation. The output signal could be a wireless signal (e.g. Bluetooth) configured to be received by a user's computer.

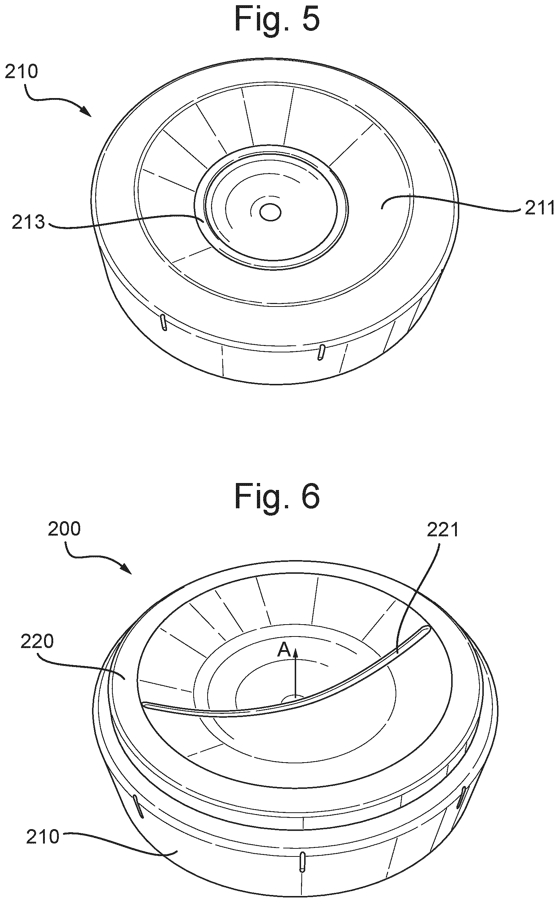

Figure 5 and Figure 6 show detailed views of components of the base structure 200. In this example, the base structure 200 includes a mount part 210, best seen in Figure 5, and a removable secondary part 220, shown in Figure 6. The mount part 210 has the form of a disc with a concave region 211, in this example formed by a depression, formed in one side. The other side (the side opposite the concave region 211) is flat so that the mount part 210 is stable when placed on a flat surface such as a table in use. The curvature of the concave region 211 corresponds approximately to that of the spherical controller body 100, such that the controller body may be received by the mount part 210. In the centre of the concave region 211 is a circular first protrusion 213, which is shaped to be received by the circular first groove 113 in the surface of the controller body 100 (visible in Figure 3). When the controller body 100 is received by the mount part 210 in use, the first protrusion 213 engages with the first groove 113 and limits movement of the controller body to rotation around the Z axis of the controller body 100. This arrangement is advantageous in use as it enables the user to rotate the controller body 100 about its axis in a steady fashion, such as might be done when panning around in the horizontal plane in an audio design environment.

The base structure 200 also comprises a removable secondary part 220, which is shown in Figure 6. The removable secondary part 220 has the general form of a plate with the form of a section of a sphere, such that the curvature of each of its surfaces is approximately the same as that of the surface of the controller body 100 and the concave region 221 in the mount part 210. The side of the secondary part 220 that is received by the concave region 211 of the mount part 210 has formed in its surface a circular groove configured to receive the first protrusion 213 of the mount part 210. Consequently, when the secondary part 220 is received in the concave region 211, its movement is restricted to rotation about the axis labelled "A" in Figure 6 (which is the axis perpendicular to the plane of the circular first protrusion 213 of the mount part 210). On the opposite side of the secondary part 220 (the convex side shown in Figure 6), there is formed a second protrusion 221 that extends across the secondary part 220 on this side. The second protrusion 221 is shaped to be received by the second groove 111 on the surface of the controller body 100. The secondary part 220, when its second protrusion 221 is engaged with the second groove 111 of the controller body 100, thus allows the controller body 100 to rotate about the axis of the controller body 100 that is perpendicular to the groove 111, which is its Y axis. Because the secondary part 220 engages with the first protrusion 213 of the mount part 210, the controller body 100 and the secondary part 221 can also rotate together about the axis A of the secondary part 221. This allows the user to rotate the controller body 100 about two axes when the mount part 210 and secondary part 220 are used together.

The first groove 113 and second groove 111 are oriented perpendicular to one another. The first groove 113 extends along a small circle on the surface of the controller body 10, and the second groove 111 extends along a portion of a great circle that intersects the centre of the small circle along which the first groove 113 extends.

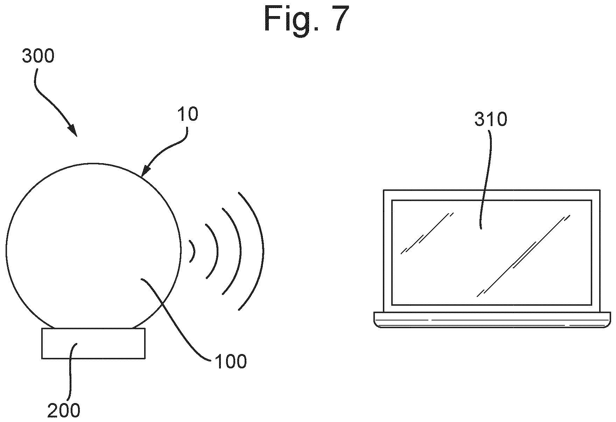

Figure 7 shows schematically an example of a computer system 300 in accordance with an embodiment of the invention. The computer system 300 includes a motion-sensing controller system 10 as described above, including controller body 100, which communicates wirelessly (e.g. by Bluetooth) with a computer 310. The output signal generated by the output component of the motion-sensing controller system 10 is sent to the computer 10 as the user manipulates the controller body 10. The computer 310 comprises a processor which executes a 3D audio design program in which a plurality of audio orientation parameters define the spatial orientation and/or position of one or more sound sources in the 3D audio environment and/or a listener in the virtual 3D audio environment. The 3D audio design program controls the orientation parameters based on the received output signal.

## Claims

1. A motion-sensing controller system comprising:
a motion-sensing controller comprising:
a handheld controller body;
an orientation-sensing component configured to sense the orientation of the controller body;
an output component configured to generate an output signal based on the sensed orientation of the controller body; and
a base structure configured to engage with the controller body such that, when the controller body and the base structure are engaged with one another, rotation of the controller body about at least one rotational axis thereof is prevented and the controller body is permitted to rotate at least part-way about another rotational axis thereof.

2. The motion-sensing controller system of any preceding claim, wherein the controller body has a generally spherical shape and the base structure comprises a concave region configured to receive the controller body, whereby the base may engage with the controller body.

3. The motion-sensing controller system of any preceding claim, wherein formed in either the surface of the controller body or the base structure are one or more grooves each configured to receive a corresponding protrusion formed on the other of the surface of the controller body and the base structure, whereby the base structure may engage with the controller body,
wherein preferably the grooves are formed in the surface of the controller body and the protrusions are formed on the base structure.

4. The motion-sensing controller system of claim 3, wherein the one or more grooves formed in the surface of the controller body comprise a first groove which is substantially circular and the base structure comprises a first protrusion configured to be received by the first groove such that when the first protrusion is received by the first groove:
the controller body is permitted to rotate at least part-way about a first rotational axis thereof which is aligned substantially perpendicular to the first groove; and
rotation of the controller body about at least one other axis thereof is prevented;
wherein preferably the first groove extends along at least a portion of a small circle on the surface of the controller body.

5. The motion-sensing controller system of any of claims 3 to 4, wherein the one or more grooves formed in the surface of the controller body comprise a second groove, the second groove preferably being oriented substantially perpendicular to the first groove if said first groove is provided, and wherein the base structure comprises a second protrusion configured to be received by the second groove such that when the first protrusion is received by the first groove:
the controller body is permitted to rotate at least part-way about a second rotational axis thereof which is aligned substantially perpendicular to the second groove; and
rotation of the controller body about at least one other axis thereof is prevented;
wherein preferably the second groove extends along at least a portion of a great circle on the surface of the controller body.

6. The motion-sensing controller system of any of claims 3 to 5, wherein the base structure comprises a mount part and a removable secondary part, the mount part comprising a protrusion or a groove, the removable secondary part being shaped such that it may simultaneously:
engage with the protrusion or groove of the base structure such that the secondary part is permitted to rotate, relative to the mount part, at least part-way about one rotational axis thereof and is prevented from rotating about all other directions, and
engage with a protrusion or groove of the controller body such that the controller body is permitted to rotate, relative to the secondary part, about a rotational axis thereof which is substantially perpendicular to the axis about which the secondary part is permitted to rotate;
wherein preferably:
the first protrusion is formed in the mount part and the secondary part is configured to engage the mount part by receiving the first protrusion, and
the second protrusion is formed in the removable secondary part and controller body is configured to engage with the secondary part by receiving the second protrusion in the second groove

7. The motion-sensing controller system of any preceding claim, wherein the orientation-sensing component is configured to sense the orientation of the controller body relative to a predetermined reference orientation;
wherein preferably the orientation-sensing component is configured to sense one or more fixed reference points in its surroundings and determine its orientation relative to the predetermined reference orientation based on the sensed reference points.

8. The motion-sensing controller system of any preceding claim, wherein the orientation-sensing component is housed within the controller body.

9. The motion-sensing controller system of any preceding claim, wherein:
the orientation-sensing component comprises one or more cameras configured to sense the orientation of the controller body relative to its surroundings, wherein the predetermined reference orientation is a predetermined orientation of the controller body relative to said surroundings; and/or
the orientation-sensing component is configured to sense the direction of a reference magnetic field and determine its orientation relative to the predetermined reference orientation based on the sensed direction of the reference magnetic field.

10. The motion-sensing controller system of any preceding claim, wherein the motion-sensing controller is a wireless controller and the output component is configured to output the output signal as a wireless signal.

11. The motion-sensing controller system of any preceding claim, wherein the controller body is configured such that, by visual inspection of the controller body, the user can ascertain the orientation of the controller body;
wherein preferably the controller body comprises indicia that are visible to the user in use and arranged such that the user can ascertain the orientation of the controller body by visual inspection of the indicia.

12. The motion-sensing controller system of any preceding claim, wherein the surface of the controller body comprises a region flattened along at least one direction, preferably two directions, said region being arranged such that when the region is placed against a planar surface in use, rotation of the controller body in the direction(s) along which the region is flattened is prevented.

13. A computer system comprising:
the motion-sensing controller system of any preceding claim; and
a processor configured to receive the output signal produced by the output component of the motion-sensing controller and control a computer program being executed by the processor based on the received output signal.

14. The computer system of claim 13, wherein the computer program is a 3D audio program configured to control one or more audio orientation parameters thereof based on the received output signal, the one or more audio orientation parameters defining the spatial orientation and/or position of one or more sound sources and/or a listener in a virtual 3D audio environment.

15. A method of interacting with a virtual 3D audio environment, the method comprising:
executing a 3D audio program in which one or more audio orientation parameters define the spatial orientation and/or position of one or more sound sources in the 3D audio environment and/or a listener in the virtual 3D audio environment; and
using an output signal generated by the motion-sensing controller system of any of claims 1 to 12 to control the one or more audio orientation parameters.
